# EUROPEAN PATENT APPLICATION

(11) **EP 4 622 283 A1**
(43) Date of publication of application: **24.09.2025**
(21) Application number: 25163218.8
(22) Date of filing: 12.03.2025
(51) Int. Cl.: H04N 23/63, H04N 23/66, H04N 23/661, H04N 23/667, H04N 23/698, H04N 23/951

(54) **SYSTEM, CAMERA, DEVICE, AND METHOD**

(30) Priority: 19.03.2024 JP 2024043501
(71) Applicant: Nintendo Co., Ltd., Kyoto 601-8501 (JP)
(72) Inventor: SHIMOHATA, Yasuyuki, Kyoto, 601 8501 (JP); MATSUMOTO, Yujiro, Kyoto, 601 8501 (JP)
(74) Representative: von Tietzen und Hennig, Nikolaus

(57) **Abstract**

A system includes a device and a camera connected to the device through a wired or wireless connection. The device alternately transmits to the camera, a first request that causes the camera to transmit image data corresponding to a first region in an imaging region of the camera and a second request that causes the camera to transmit image data corresponding to a second region in the imaging region. The camera generates first image data corresponding to the first region from entire image data and transmits first data including the first image data to the device in accordance with the first request, and generates second image data corresponding to the second region from the entire image data and transmits second data including the second image data to the device in accordance with the second request. The device outputs a synthesized image including a first image based on the first image data and a second image based on the second image data.

## Description

The present disclosure relates to a system, a camera, a device, and a method.

### INTRODUCTION

For example, Japanese Patent Laying-Open No. 2012-84968 discloses a configuration configured to transmit image data from a camera main body to a monitor apparatus.

### SUMMARY

There is a need for simultaneous output of images of different regions in an image imaged by a single camera. The present disclosure provides a new solution for such a need.

(Configuration 1) A system according to one embodiment includes a device and a camera connected to the device through a wired or wireless connection. The device alternately transmits to the camera, a first request that causes the camera to transmit image data corresponding to a first region in an imaging region of the camera and a second request that causes the camera to transmit image data corresponding to a second region in the imaging region. The camera generates first image data corresponding to the first region from entire image data corresponding to the imaging region and transmits first data including the first image data to the device, in accordance with the first request, and generates second image data corresponding to the second region from the entire image data and transmits second data including the second image data to the device, in accordance with the second request. The device outputs a synthesized image including a first image based on the first image data in the received first data and a second image based on the second image data in the received second data.

According to Configuration 1, the camera transmits to the device, the first image data corresponding to the first region based on the first request and the second image data corresponding to the second region based on the second request. Since the data transmitted from the camera to the device does not have to include image data not necessary for output of the synthesized image, the synthesized image including images corresponding to at least two regions can be outputted while an amount of the transmitted data is suppressed.

For example, considering processing for transmission of the entire image data from the camera to the device and extraction by the device, of image data necessary for the synthesized image from the entire image data, information on a region that has not been extracted from the entire image data is not necessary. Transmission of the entire image data including also the information that may be unnecessary leads to waste of a communication band between a device and a camera. In Configuration 1, such waste of the communication band can be reduced.

(Configuration 2) In Configuration 1, the first request may include first identification information and the first data may include second identification information corresponding to the first identification information. The device may arrange the first image at a first position in the synthesized image based on the received first data including the second identification information and to arrange the second image at a second position in the synthesized image based on the received second data not including the second identification information.

According to Configuration 2, the device can at least distinguish between the first image data and the second image data based on whether or not the first data received from the camera includes the second identification information and determine positions in the synthesized image where images are to be outputted. For example, in an example where details of region setting instead of the identification information are transmitted to the device, match between the details of two region settings may lead to failure in distinction between the first image data and the second image data. In contrast, with the use of the identification information, the first image data and the second image data can reliably be distinguished from each other.

(Configuration 3) In Configuration 1 or 2, the first request may include first identification information and the first data may include second identification information corresponding to the first identification information. The second request may include third identification information different from the first identification information and the second data may include fourth identification information corresponding to the third identification information and different from the second identification information. The device may arrange the second image at a second position in the synthesized image based on the received second data including the fourth identification information.

According to Configuration 3, the device can at least distinguish between the first image data and the second image data based on whether or not the first data received from the camera includes the second identification information and whether or not the second data received from the camera includes the fourth identification information and determine positions in the synthesized image where images are to be outputted. For example, in an example where details of region setting instead of the identification information are transmitted to the device, match between the details of two region settings may lead to failure in distinction between the first image data and the second image data. In contrast, with the use of the second identification information and the fourth identification information, the first image data and the second image data can reliably be distinguished from each other.

(Configuration 4) In Configuration 3, the first identification information and the third identification information may be set irrelevant to which region in the imaging region the camera is caused to transmit image data corresponds to.

According to Configuration 4, with the use of the identification information independent of details of region setting, possibility of confusion between the first image data and the second image data in the device can be lowered.

(Configuration 5) In Configuration 3 or 4, each of the first identification information and the third identification information may be one of two values.

According to Configuration 5, since the first identification information and the third identification information can be expressed with data (for example, one bit) indicating one of two values, an amount of transmitted data can be suppressed.

(Configuration 6) In any of Configurations 2 to 5, the first identification information may be stored in a header defined under USB video class (UVC) standard.

According to Configuration 6, since the identification information is stored in a header different from the image data, the image data is not affected. Since the header defined under the standard should only be processed, processing for distinction is stabilized.

(Configuration 7) In any of Configurations 2 to 6, the first identification information may be stored in the first image data.

According to Configuration 7, with the use of the image data itself, the first image data and the second image data can be distinguished from each other. Since the identification information is stored in the image data, an amount of data necessary for transmission of the identification information can be suppressed.

(Configuration 8) In Configuration 7, the first identification information may be stored in data in the first image data, the data corresponding to an image at an edge in the first region.

According to Configuration 8, lowering in quality of the first image corresponding to the first image data when viewed from a user can be suppressed.

(Configuration 9) In any of Configurations 1 to 8, the first request may include a request for setting image data corresponding to the first region in the imaging region as image data in data the camera is caused to transmit. The second request may include a request for setting image data corresponding to the second region in the imaging region as image data in data the camera is caused to transmit. The camera may transmit data including the set image data in accordance with a third request that causes the camera to transmit data including image data.

According to Configuration 9, by determining timing of transmission of the third request in accordance with timing of transmission of the first request and/or the second request, reflection of setting of the first region and/or the second region on the image data transmitted by the camera can be optimized.

(Configuration 10) In any of Configurations 1 to 9, the device may transmit a fourth request for setting an image size of the image data the camera is caused to transmit, before transmission of the first request and the second request. The first request and the second request may include no request for changing the image size.

Processing for changing the image size in the camera may relatively take time. According to Configuration 10, as the first request and the second request do not include a request for changing the image size, the first request and/or the second request can be reflected in the camera faster. Consequently, possibility of delay in transmission of data from the camera to the device can be lowered.

(Configuration 11) In Configuration 10, the set image size may be smaller than an image size according to specifications.

According to Configuration 11, processing such as optical zoom can also be performed.

(Configuration 12) According to another embodiment, a camera connected to a device through a wired or wireless connection is provided. The camera generates first image data corresponding to the first region from entire image data corresponding to the imaging region in accordance with the first request, generates second image data corresponding to the second region from the entire image data in accordance with the second request, transmits first data including the first image data to the device, transmits first data including the first image data to the device, and transmits second data including the second image data to the device. The first request includes first identification information and the first data includes second identification information corresponding to the first identification information. According to Configuration 12, an effect as in Configuration 1 is obtained.

(Configuration 13) In Configuration 12, the first identification information may be stored in a header defined under USB video class (UVC) standard. According to Configuration 13, an effect as in Configuration 6 is obtained.

(Configuration 14) In Configuration 12 or 13, the first identification information may be stored in the first image data. According to Configuration 14, an effect as in Configuration 7 is obtained.

(Configuration 15) According to yet another embodiment, a device connected to a camera through a wired or wireless connection is provided. The device alternately transmits to the camera, a first request that causes the camera to transmit image data corresponding to a first region in an imaging region of the camera and a second request that causes the camera to transmit image data corresponding to a second region in the imaging region. The camera generates first image data corresponding to the first region from entire image data corresponding to the imaging region and transmits first data including the first image data to the device, in accordance with the first request, and generates second image data corresponding to the second region from the entire image data and transmits second data including the second image data to the device, in accordance with the second request. The device is configured to output a synthesized image including a first image based on the first image data in the received first data and a second image based on the second image data in the received second data. According to Configuration 15, an effect as in Configuration 1 is obtained.

(Configuration 16) In Configuration 15, the first request may include first identification information and the first data may include second identification information corresponding to the first identification information. The device may arrange the first image at a first position in the synthesized image based on the received first data including the second identification information and to arrange the second image at a second position in the synthesized image based on the received second data not including the second identification information. According to Configuration 16, an effect as in Configuration 2 is obtained.

(Configuration 17) In Configuration 15 or 16, the first request may include first identification information and the first data may include second identification information corresponding to the first identification information. The second request may include third identification information different from the first identification information and the second data may include fourth identification information corresponding to the third identification information and different from the second identification information. The device may arrange the second image at a second position in the synthesized image based on the received second data including the fourth identification information. According to Configuration 17, an effect as in Configuration 3 is obtained.

(Configuration 18) In still another embodiment, a method to be performed in a system including a device and a camera connected to the device through a wired or wireless connection is provided. The method includes alternately transmitting, by the device, to the camera, a first request that causes the camera to transmit image data corresponding to a first region in an imaging region of the camera and a second request that causes the camera to transmit image data corresponding to a second region in the imaging region, generating, by the camera, first image data corresponding to the first region from entire image data corresponding to the imaging region and transmitting, by the camera, first data including the first image data to the device, in accordance with the first request, generating, by the camera, second image data corresponding to the second region from the entire image data and transmitting, by the camera, second data including the second image data to the device, in accordance with the second request, and outputting, by the device, a synthesized image including a first image based on the first image data in the received first data and a second image based on the second image data in the received second data. According to Configuration 18, an effect as in Configuration 1 is obtained.

The foregoing and other objects, features, aspects, and advantages of the present disclosure will become more apparent from the following detailed description of the present disclosure when taken in conjunction with the accompanying drawings.

### BRIEF DESCRIPTION OF THE DRAWINGS

Fig. 1 shows an exemplary illustrative non-limiting drawing illustrating an exemplary configuration of a system according to the present embodiment.
Fig. 2 shows an exemplary illustrative non-limiting drawing for explaining exemplary imaging processing and display processing in the system according to the present embodiment.
Fig. 3 shows an exemplary illustrative non-limiting drawing illustrating an exemplary result of processing in the system according to the present embodiment.
Fig. 4 shows an exemplary illustrative non-limiting drawing illustrating another exemplary result of processing in the system according to the present embodiment.
Fig. 5 shows an exemplary illustrative non-limiting drawing illustrating exemplary processing for communication between a device and a camera in the system according to the present embodiment.
Fig. 6 shows an exemplary illustrative non-limiting drawing illustrating other exemplary processing for communication between the device and the camera in the system according to the present embodiment.
Figs. 7A and 7B each show an exemplary illustrative non-limiting drawing illustrating exemplary embedment of identification information in an image in the system according to the present embodiment.
Figs. 8A and 8B each show an exemplary illustrative non-limiting flowchart illustrating an exemplary processing procedure in the device in the system according to the present embodiment.

### DETAILED DESCRIPTION

The present embodiment will be described in detail with reference to the drawings. The same or corresponding elements in the drawings have the same reference characters allotted and description thereof will not be repeated.

### [A. Exemplary System Configuration]

An exemplary configuration of a system 1 according to the present embodiment will initially be described.

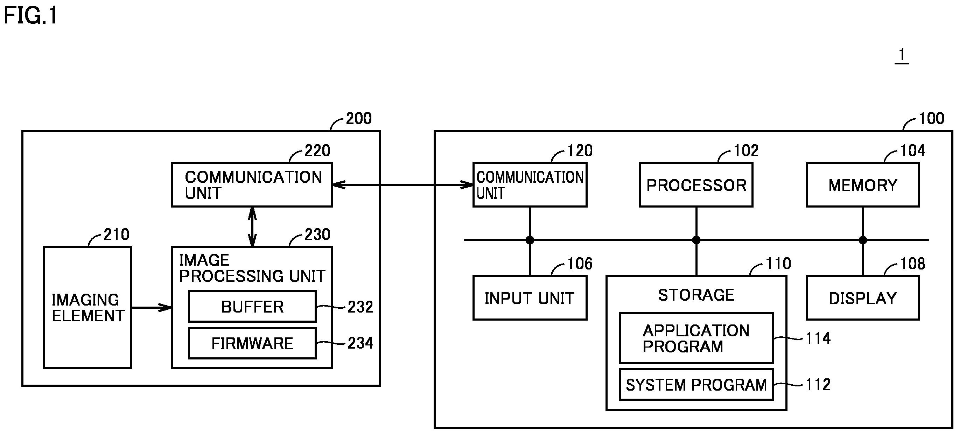

An exemplary configuration of system 1 according to the present embodiment will be described with reference to Fig. 1. System 1 includes a device 100 and a camera 200 connected to device 100 through a wired or wireless connection. Camera 200 is configured to image moving images. Camera 200 may be configured to be attached to and removed from device 100. Camera 200 may be, for example, a camera for a video call or a surveillance camera. A plurality of cameras 200 may be configured to be connected to device 100. Camera 200 may be configured to be connected only to a specific device or to various devices.

Device 100 is configured to show an image imaged by camera 200. Device 100 includes, for example, a processor 102, a memory 104, a storage 110, an input unit 106, a display 108, and a communication unit 120. Device 100 may be, for example, a personal computer, a game device, a television receiver, a smartphone, or the like.

Processor 102 is a processing entity for performing processing in device 100. Processor 102 includes, for example, a central processing unit (CPU), a graphics processing unit (GPU), and the like. Processor 102 executes a program stored in storage 110 by developing the program on memory 104.

Memory 104 is a volatile storage medium accessible by processor 102, and it includes, for example, a dynamic random access memory (DRAM), a static random access memory (SRAM), and the like.

Storage 110 is a non-volatile storage medium accessible by processor 102, and it includes, for example, a flash memory, a hard disk, and the like. Storage 110 may include, for example, a storage medium attachable to and removable from device 100, such as a cartridge and an optical disc.

For example, a system program 112, an application program 114, and the like are stored in storage 110.

System program 112 includes a computer-readable instruction for basic processing such as processing for communication between device 100 and camera 200, processing of image data received from camera 200, and the like.

Application program 114 includes a computer-readable instruction for execution of various applications.

The term "processor" herein encompasses at least processing circuitry that performs processing in accordance with a computer-readable instruction, such as a CPU and a GPU, and hard-wired circuitry such as an application specific integrated circuit (ASIC) and a field programmable gate array (FPGA).

The term "memory" herein encompasses at least memory 104 and storage 110.

A system on chip (SoC) in which functions of the processor, the memory, and the like are integrated may be adopted for device 100. The processor and the memory in this case are located in the same SoC (an exemplary integrated circuit). Therefore, the terms "processor" and "memory" herein also encompass a configuration in which they are independent of each other and a configuration in which they are integrated.

Input unit 106 receives an operation by a user. Input unit 106 includes, for example, a keyboard, a mouse, a game controller, a button, a cross-shaped key, a microphone, or the like. Input unit 106 may be an interface with an apparatus that receives an operation by the user. In other words, the apparatus that receives the operation by the user may be located outside device 100.

Display 108 shows images or video images generated by processing by processor 102. Display 108 includes, for example, a liquid crystal display (LCD), an organic EL display, and the like. Display 108 may be an interface with a display apparatus. In other words, the display apparatus may be located outside device 100.

Communication unit 120 transmits and receives data to and from camera 200. Communication unit 120 may be connected to camera 200 through a wired or wireless connection. In wired connection, for example, universal serial bus (USB) connection, parallel connection, and the like may be adopted. In wireless connection, for example, Bluetooth^{®}, ZigBee^{®}, wireless LAN (IEEE 802.11), and the like may be adopted.

Device 100 may be a general-purpose personal computer. In this case, device 100 may be provided with a driver responsible for communication with camera 200 as will be described later, in addition to or instead of system program 112.

Camera 200 includes, for example, an imaging element 210, a communication unit 220, and an image processing unit 230.

Imaging element 210 outputs image data (which will also be referred to as "entire image data" below) based on incident light. Imaging element 210 includes, for example, a charge-coupled device (CCD) image sensor, a complementary metal oxide semiconductor (CMOS) image sensor, and the like. In a stage preceding imaging element 210, a lens may be arranged. A range where imaging element 210 can generate image data will also be referred to as an "imaging region."

Communication unit 220 transmits and receives data to and from device 100. Communication unit 220 is configured similarly to communication unit 120.

Image processing unit 230 processes entire image data outputted from imaging element 210 and transmits a result of processing to device 100 through communication unit 220. Processing to be performed by image processing unit 230 may conform to a request and/or setting from device 100. Image processing unit 230 may include a buffer 232 where the entire image data outputted from imaging element 210 is temporarily stored.

Image processing unit 230 may include, for example, firmware 234. Firmware 234 includes a computer-readable instruction that instructs image processing unit 230 to perform processing. Image processing unit 230 may include a processor, an ASIC, and an FPGA which are not shown.

### [B. Imaging Processing and Display Processing]

Imaging processing and display processing in system 1 according to the present embodiment will now be described.

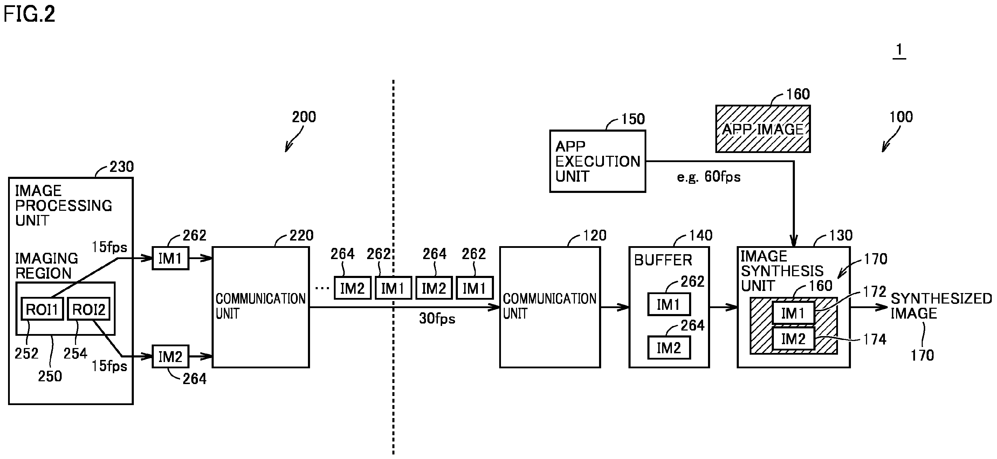

Exemplary imaging processing and display processing in system 1 according to the present embodiment will be described with reference to Fig. 2. Image processing unit 230 of camera 200 generates first image data 262 corresponding to a first region 252 in an imaging region 250 of camera 200 and second image data 264 corresponding to a second region 254 in imaging region 250 of camera 200, based on the entire image data outputted from imaging element 210 (Fig. 1), in accordance with communication processing which will be described later. For example, image processing unit 230 alternately generates first image data 262 and second image data 264. In an example where image processing unit 230 generates an image at 30 frames per second (fps), first image data 262 may be generated at 15 fps and second image data 264 may be generated at 15 fps. First region 252 and second region 254 may each be set as a region of interest (ROI). In an example where device 100 and camera 200 are connected through a USB connection and data is exchanged under USB video class (UVC) standard which is communication specifications for the camera, the ROI may also be set with a method in accordance with the UVC standard.

Communication unit 220 of camera 200 successively transmits image data generated by image processing unit 230 to device 100.

The image data from camera 200 successively received by communication unit 120 of device 100 is stored in a buffer 140. Buffer 140 may include an area for storage of each of first image data 262 and second image data 264. As first image data 262 and second image data 264 are successively updated in respective areas, latest first image data 262 and latest second image data 264 are stored in buffer 140.

An image synthesis unit 130 generates a synthesized image 170 including a first image 172 based on first image data 262 stored in buffer 140 and a second image 174 based on second image data 264. Image synthesis unit 130 may generate synthesized image 170 also based on an app image 160 generated by an app execution unit 150 that executes application program 114 (Fig. 1). A cycle of generation (or a cycle of update) of synthesized image 170 may be shorter than a cycle of transmission of the image data from camera 200.

Image synthesis unit 130 outputs generated synthesized image 170. Processing for outputting synthesized image 170 includes at least one of processing for showing synthesized image 170 on display 108 (Fig. 1), processing for outputting a signal for showing synthesized image 170 to an external display apparatus or the like, processing for transmitting data for showing synthesized image 170 through a network or the like, and processing for storing data for showing synthesized image 170 in a storage medium.

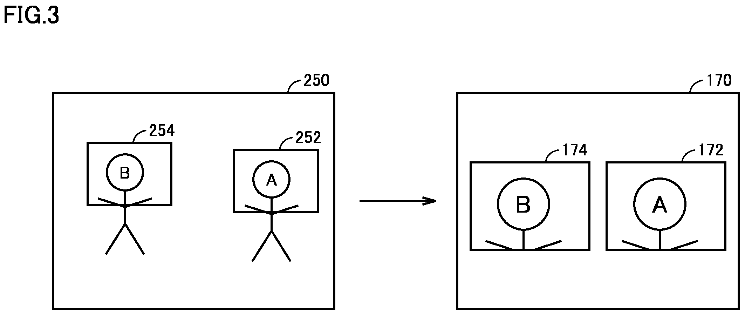

An exemplary result of processing in system 1 according to the present embodiment will now be described. In the example shown in Fig. 3, two persons are present in imaging region 250 of camera 200. For example, first region 252 is set around a face of one person and second region 254 is set around a face of the other person. Synthesized image 170 generated based on first image data 262 corresponding to first region 252 and second image data 264 corresponding to second region 254 at this time includes images of the faces of respective persons and their vicinities. In synthesized image 170, positions where first image 172 and second image 174 are to be shown and sizes thereof may be set in advance or do not have to be set. By way of example, a position where at least one of first image 172 and second image 174 is to be shown may move depending on a state of execution of application program 114.

Each of first region 252 and second region 254 can freely be set in imaging region 250. Therefore, entire imaging region 250 can also be set as first region 252 and/or second region 254.

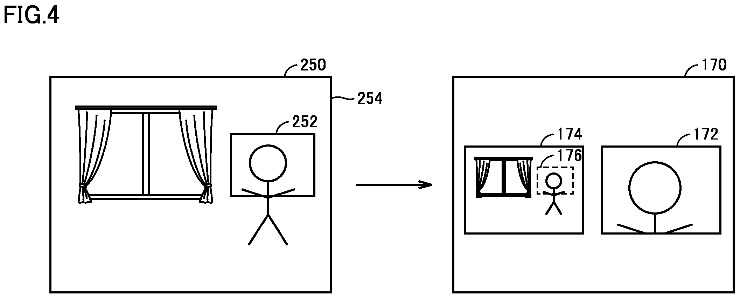

Another exemplary result of processing in system 1 according to the present embodiment will be shown. In the example shown in Fig. 4, a person is present in imaging region 250 of camera 200. For example, first region 252 is set around the face of the person and entire imaging region 250 is set as second region 254. At this time, synthesized image 170 includes first image 172 showing the face of the person and its vicinity and second image 174 showing the entire field of view of camera 200.

First region 252 and second region 254 can be set with any method.

Image synthesis unit 130 may process at least one of first image 172 and second image 174. In Fig. 4, second image 174 includes a frame object 176 indicating a region corresponding to first image 172. In other words, image synthesis unit 130 generates second image 174 by performing processing for superimposing frame object 176 on second image data 264 corresponding to second region 254.

As shown in Fig. 4, as frame object 176 indicating the region corresponding to first image 172 is superimposed, the user can know at a glance, which region in imaging region 250 of camera 200 is zoomed in. In addition, the user can know at a glance, how the region zoomed in is shown.

### [C. Communication Processing]

Processing for communication between device 100 and camera 200 in system 1 according to the present embodiment will now be described.

Device 100 provides a request and/or setting to camera 200 at appropriate timing so as to have camera 200 transmit first image data 262 and second image data 264.

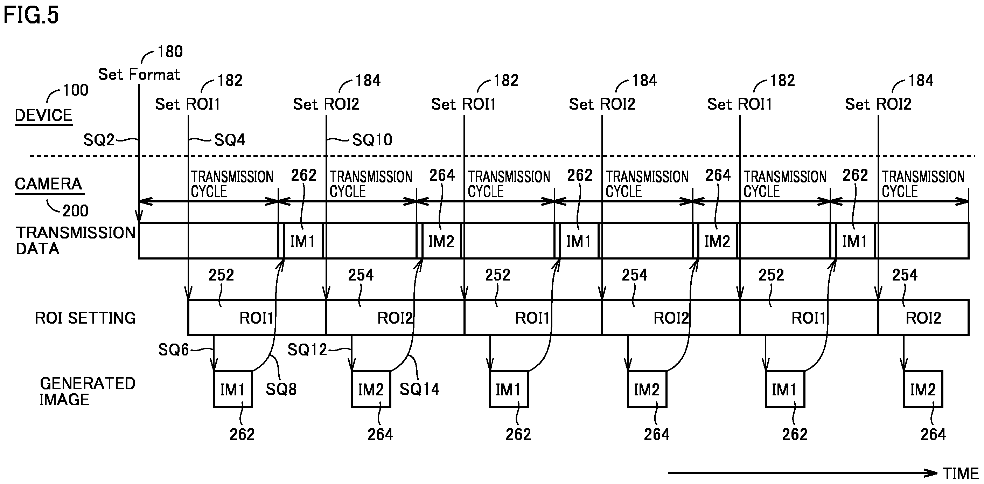

Referring to Fig. 5, device 100 transmits to camera 200, initial setting 180 (shown as "Set Format" in Fig. 5) necessary for transmission of image data (sequence SQ2). Initial setting 180 includes setting of a data format and/or an image size for image data to be transmitted by camera 200. Camera 200 (or image processing unit 230) sets a default image size in accordance with initial setting 180.

In an example where an aspect ratio (for example, 16:9, 3:4, and the like) is set in advance for camera 200, initial setting 180 may include only setting of the number of pixels (for example, 360 pixels, 180 pixels, and the like) of a short side. When 360 pixels is set in the example where the aspect ratio has been set to 16:9, camera 200 sets 640 pixels × 360 pixels as the image size. The image size set in initial setting 180 may be smaller than an image size (for example, 1920 pixels × 1080 pixels) of the entire image data outputted by imaging element 210. In other words, the image size set in initial setting 180 may be smaller than the image size under specifications.

A cycle (fps) of transmission of the image data by camera 200 may be set in advance or included in initial setting 180.

Then, device 100 transmits to camera 200, first region setting 182 (shown as "Set ROI1" in Fig. 5) for setting first region 252 as the region, the image data of which is to be generated (sequence SQ4). Camera 200 (or image processing unit 230) sets first region 252 as the ROI in accordance with first region setting 182.

First region setting 182 includes a request for setting first image data 262 corresponding to first region 252 in imaging region 250 as image data in data camera 200 is caused to transmit.

Camera 200 then starts generation of the image data in accordance with the set ROI, in synchronization with a transmission cycle (sequence SQ6). In an example where first region 252 is set as the ROI, camera 200 (or image processing unit 230) generates first image data 262 corresponding to first region 252. Camera 200 (or image processing unit 230) transmits data including generated first image data 262 to device 100 (sequence SQ8).

Device 100 transmits to camera 200, second region setting 184 (shown as "Set ROI2" in Fig. 5) for setting second region 254 as the region, the image data of which is to be generated (sequence SQ10). Camera 200 (or image processing unit 230) sets second region 254 as the ROI in accordance with second region setting 184.

Second region setting 184 includes a request for setting second image data 264 corresponding to second region 254 in imaging region 250 as image data in data camera 200 is caused to transmit.

Camera 200 then starts generation of the image data in accordance with the set ROI, in synchronization with the transmission cycle (sequence SQ12). In an example where second region 254 is set as the ROI, camera 200 (or image processing unit 230) generates second image data 264 corresponding to second region 254. Camera 200 (or image processing unit 230) transmits data including generated second image data 264 to device 100 (sequence SQ14).

Processing similar to sequences SQ4 to SQ14 is repeated from this time.

As device 100 successively provides to camera 200, first region setting 182 and/or second region setting 184 (which may also collectively be referred to as "region setting" below) for generation of the image data as shown in Fig. 5, device 100 can obtain image data corresponding to different regions in imaging region 250.

Device 100 thus alternately transmits to camera 200, first region setting 182 for transmission by camera 200, of the image data corresponding to first region 252 in imaging region 250 of camera 200 and second region setting 184 for transmission by camera 200, of the image data corresponding to second region 254 in imaging region 250. As will be described later, switching between first region setting 182 and second region setting 184 does not have to strictly be alternate.

Camera 200 generates first image data 262 corresponding to first region 252 from the entire image data (for example, the image data outputted by imaging element 210 shown in Fig. 1) corresponding to imaging region 250 and transmits data including first image data 262 to device 100, in accordance with first region setting 182. In addition, camera 200 generates second image data 264 corresponding to second region 254 from the entire image data and transmits data including second image data 264 to device 100, in accordance with second region setting 184.

In sequences SQ6 and SQ12, camera 200 may start generation of the image data in accordance with the set ROI, based on an image transmission request from device 100. In this case, device 100 successively transmits the image transmission requests to camera 200, in synchronization with the transmission cycle. In other words, camera 200 may transmit data including the set image data, in response to the image transmission request which is a request that causes camera 200 to transmit the data including the image data.

Therefore, the "first request" may include first region setting 182 and the image transmission request that requests image data corresponding to first region setting 182. Similarly, the "second request" may include second region setting 184 and the image transmission request that requests image data corresponding to second region setting 184.

As shown in Fig. 5, before device 100 transmits first region setting 182 and second region setting 184, device 100 transmits to camera 200, initial setting 180 for setting the image size of image data camera 200 is caused to transmit.

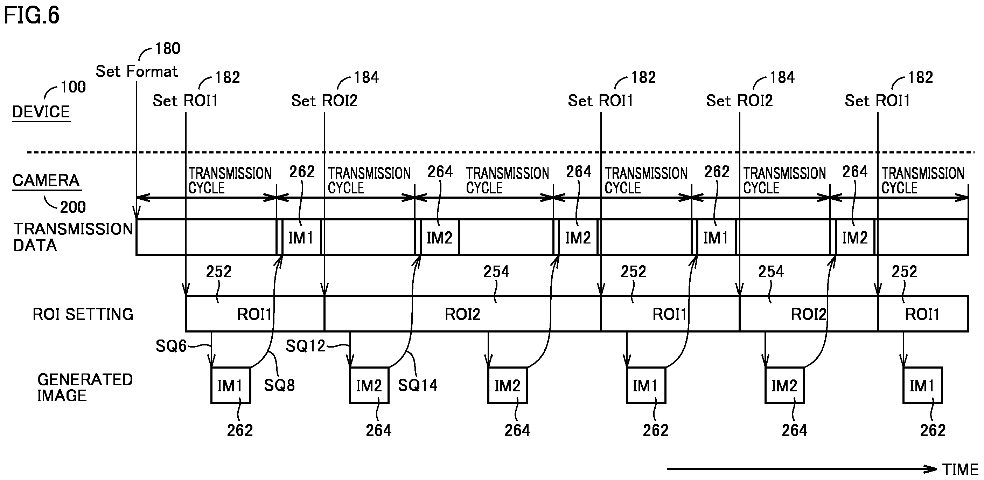

Other exemplary processing for communication between device 100 and camera 200 in system 1 according to the present embodiment will now be described. Fig. 6 shows an example where device 100 transmits second region setting 184 to camera 200, and thereafter transmits first region setting 182 to camera 200 after lapse of a time period exceeding one transmission cycle.

In the example shown in Fig. 6, camera 200 sets second region 254 as the ROI in accordance with second region setting 184, and thereafter it maintains the earlier set ROI until it receives new region setting. Therefore, camera 200 transmits second image data 264 consecutively two times. In other words, while camera 200 alternately transmits first image data 262 and second image data 264, it may transmit either image data consecutively.

Device 100 thus should only obtain first image data 262 and second image data 264 within a period sufficient for the user to recognize that first image 172 and second image 174 were taken at timing the same to some extent, and first image data 262 and second image data 264 do not have to strictly alternately be transmitted. In other words, a transmission order and a transmission pattern in alternate transmission of first image data 262 and second image data 264 may freely be set and modified in accordance with convenience of a device 100 side. For example, a frequency of transmission of one of first image data 262 and second image data 264 may be higher.

### [D. Region Setting]

Region setting transmitted from device 100 to camera 200 will now be described.

First region setting 182 and second region setting 184 may include identification information for specifying each region setting. For example, first region setting 182 may include "0" as the identification information and second region setting 184 may include "1" as the identification information. Alternatively, in an example where there are two types of region setting, the identification information may be provided only to one region setting. For example, first region setting 182 may include the identification information and second region setting 184 does not have to include the identification information.

First region setting 182 may thus include first identification information and second region setting 184 may include third identification information different from the first identification information. The identification information included in first region setting 182 and the identification information included in second region setting 184 may each be one of two values.

Setting details of first region setting 182 and second region setting 184 do not have to be associated with a value of the identification information included in first region setting 182 and second region setting 184. The identification information serves to specify region setting among a plurality of region settings, and it does not have to specify even details of the region setting. In other words, the identification information included in first region setting 182 and the identification information included in second region setting 184 may be set irrelevant to which region in imaging region 250 camera 200 is caused to transmit image data corresponds to.

As will be described later, camera 200 can determine identification information to be provided to generated image data based on the identification information included in the region setting (and/or the identification information not being included).

By adopting such identification information, for example, device 100 can determine to which region setting the image data corresponds, for example, even when the setting details of first region setting 182 are the same as the setting details of second region setting 184. By way of example, an example where first region 252 and second region 254 coincide with each other when first region 252 and second region 254 change relatively to each other is considered. At this time, device 100 may be unable to determine which of first image 172 and second image 174 in synthesized image 170 should be updated based on the image data transmitted from camera 200. If the identification information is adopted as above, however, which of first image 172 and second image 174 should be updated is clear based on the image data transmitted from camera 200 even when first region 252 and second region 254 coincide with each other. In another embodiment, the identification information does not have to be used. By way of example, when first region 252 and second region 254 are identical to each other, both of first image 172 and second image 174, that is, first image data 262 stored in buffer 140 and latest second image data 264, may be updated based on the received image data.

First region setting 182 and second region setting 184 may include as parameters for setting of the ROI, a coordinate (for example, an X coordinate and a Y coordinate) of a reference position (for example, an upper left vertex) of the ROI and the number of pixels of one side (for example, a long side) of the ROI. In an example where the aspect ratio is set in advance, the image size of the ROI is calculated based on setting of the number of pixels of one side of the ROI.

For example, when (100, 100, 480) is set as the parameter (for example, the X coordinate, the Y coordinate, and the number of pixels of the long side) of first region setting 182 or second region setting 184, with the aspect ratio of 16:9, the image size is calculated as 480 pixels × 270 pixels. Consequently, a quadrangular region having coordinates (100, 100), (100, 370), (580, 100), and (580, 370) as vertices is set as the ROI.

Image processing unit 230 of camera 200 extracts image data corresponding to the region set as the ROI, from the entire image data outputted from imaging element 210. Rather than extraction after storage once of the entire image data outputted from imaging element 210, imaging element 210 may output as it is, image data corresponding to the region set as the ROI.

Since the extracted image data has the size of 480 pixels × 270 pixels in the example above, image processing unit 230 of camera 200 resizes (for example, scales down or up) the extracted image such that the image size thereof matches with the image size (for example, 640 pixels × 360 pixels) set in initial setting 180. Image processing unit 230 of camera 200 may scale up the extracted image (or scale up a resolution). When the image size of the ROI matches with the image size set in initial setting 180, resize processing does not have to be performed.

The image size of image data to be generated by camera 200 is set in advance in initial setting 180. In addition, image processing unit 230 of camera 200 resizes the image. Therefore, first region setting 182 or second region setting 284 does not have to include a request for changing the image size.

Thus, in system 1 according to the present embodiment, camera 200 generates image data necessary for display on device 100. Therefore, unnecessary image data does not have to be transmitted and a communication band between device 100 and camera 200 can effectively be used. Regardless of the position and the size of the set ROI, the image data of the image size set in advance is transmitted, and hence variation in processing load for display on device 100 can be suppressed.

### [E. Identification of Image Data]

An exemplary method of identifying to which ROI the image data received by device 100 from camera 200 corresponds will now be described.

### (e1: Storage of Identification Information in Header)

The identification information for specifying the corresponding ROI may be included in data transmitted from camera 200 to device 100.

Specifically, first data including first image data 262 that is transmitted from camera 200 may include identification information corresponding to identification information in first region setting 182. Second data including second image data 264 that is transmitted from camera 200 may include identification information corresponding to identification information in second region setting 184. When second region setting 184 does not include the identification information, the second data including second image data 264 that is transmitted from camera 200 does not have to include the identification information either. The first identification information and the second identification information may be the same as or different from each other, and the third identification information and the fourth identification information may be the same as or different from each other.

The identification information included in data may be in any format. For example, the identification information for specifying the ROI may be stored in a header defined under the UVC standard.

Camera 200 may cause the identification information (for example, "0" or "1" ) in the region setting corresponding to the generated image data to be included in the header as it is.

When there is no identification information in the region setting corresponding to the generated image data, no identification information may be included in the header. When there is identification information in the region setting corresponding to the generated image data, information indicating presence of setting information may be included in the header. For example, when a partial region and the entire region in imaging region 250 are each set as the ROI, the image data indicating the partial region may be provided with the identification information to the effect that the region setting has been made (or the identification information the same as the identification information of the region setting) and the image data indicating the entire region does not have to be provided with any identification information.

Alternatively, camera 200 may cause a value (for example, a character string such as "ROI1" or "ROI2") calculated under predetermined rules from the identification information in the region setting corresponding to the generated image data to be included in the header.

The identification information stored in the header may be described in a key-value format.

As described above, device 100 can determine, based on the identification information included in the data received from camera 200, to which region setting the received image data corresponds. Adoption of such a configuration can stabilize processing for determining the ROI corresponding to the image data in device 100.

### (e2: Embedment of Identification Information in Image)

Identification information for specifying on which region setting an image is based may be embedded in the image. In other words, the identification information for specifying the corresponding region setting may be stored in the image data.

After camera 200 generates the image data, it rewrites a specific pixel value in the generated image data, based on the region setting corresponding to the generated image data.

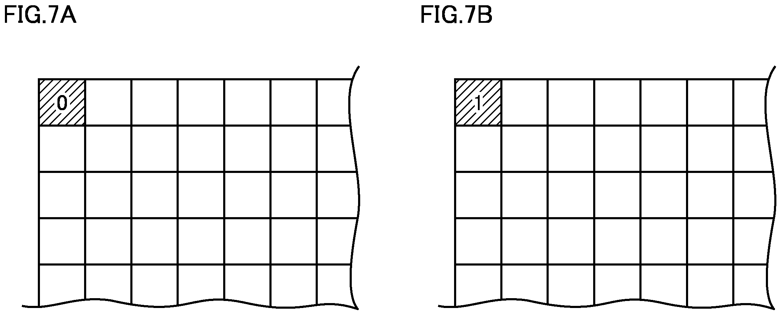

Exemplary embedment of the identification information in the image in system 1 according to the present embodiment will be described with reference to Figs. 7A and 7B. Figs. 7A and 7B show a luminance (Y) map in the image data in a YCbCr format by way of example.

The identification information may be stored in data corresponding to an image at an edge in the ROI, in image data. For example, a pixel value (or a luminance value) of a specific coordinate (the upper left vertex in the example shown in Figs. 7A and 7B) of the image data may forcibly be set to "0" (Fig. 7A) or "1" (Fig. 7B). "0" may be interpreted as meaning the image generated in accordance with first region setting 182 and "1" may be interpreted as meaning the image generated in accordance with second region setting 184.

When device 100 receives from camera 200, the image data in which the identification information has been embedded, it determines on which region setting the received image data is based, based on the pixel value of the specific coordinate.

The pixel value of the specific coordinate of the received image data is different from an original value thereof. When the image data has a sufficiently large image size, however, a feeling of strangeness in terms of the sense of sight is ignorable, and hence the image data may be used as it is for generation of synthesized image 170. Alternatively, device 100 may estimate the pixel value of the specific coordinate from pixel values of coordinates around the specific coordinate and correct the pixel value.

A position of the pixel at which the identification information is embedded may be any position. The identification information can similarly be embedded in the image also in an example where the image data in any format such as an RGB format and a CMYK format rather than the YCbCr format is generated.

By adoption of the method of embedding the identification information in the image, device 100 can determine to which region setting the received image data corresponds, without storage of the identification information in the header or the like.

### (e3: Identification Based on Timing)

As described above, as device 100 provides the region setting to camera 200, the ROI is set in camera 200 and camera 200 transmits image data corresponding to the set ROI. Therefore, when device 100 receives the image data from camera 200, the device may specify latest region setting in the past back from timing of reception of the image data by a length exceeding predetermined delay time and determine the image data as corresponding to the specified region setting.

The predetermined delay time may be determined in consideration of a time period necessary for setting of the ROI in camera 200, a time period necessary for generation of the image data corresponding to the ROI in camera 200, a time period necessary for transmission of the image data from camera 200 to device 100, and the like.

### [F. Processing in Device 100]

Exemplary processing in device 100 will now be described.

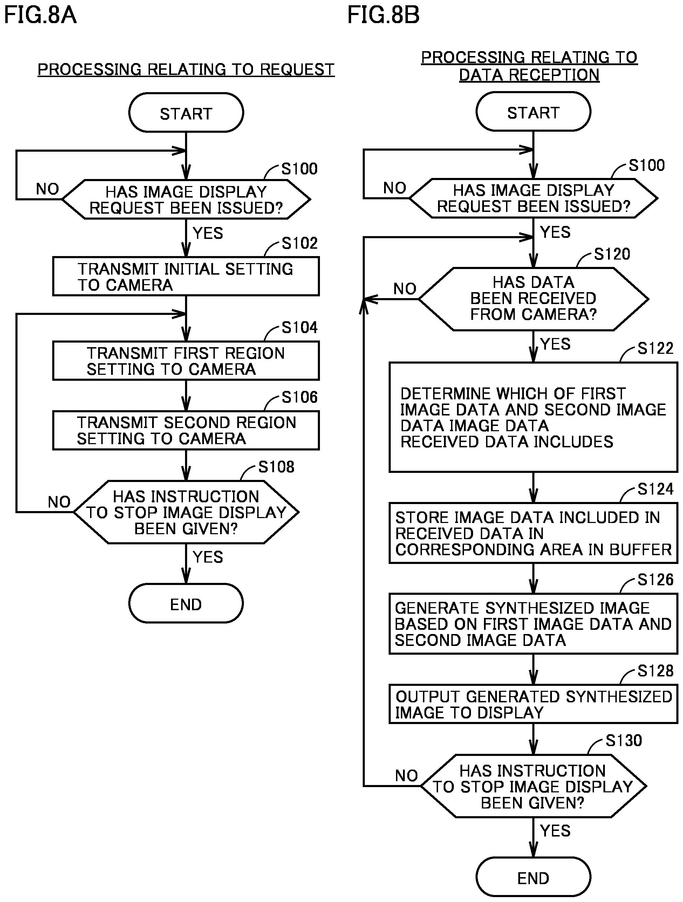

Each step shown in Figs. 8A and 8B may be performed by execution of system program 112 and/or application program 114 by processor 102 of device 100. Fig. 8A shows processing relating to a request from device 100 to camera 200. Fig. 8B shows processing relating to reception of data from camera 200 in device 100.

Referring to Fig. 8A, when an image display request has been issued (YES in step S100), device 100 transmits initial setting 180 to camera 200 (step S102). The image display request may be issued, for example, in response to an operation by the user or by application program 114 (or app execution unit 150 shown in Fig. 2).

Device 100 then transmits first region setting 182 to camera 200 in synchronization with the transmission cycle (step S104). Device 100 then transmits second region setting 184 to camera 200 in synchronization with the transmission cycle (step S106).

Device 100 repeats processing in steps S104 and S106 until it is instructed to stop image display.

When device 100 is instructed to stop image display (YES in step S108), it quits the process. Device 100 may quit the process after it transmits a request for resetting setting to camera 200.

Device 100 may transmit an image transmission request to camera 200 after step S104 and step S106.

Referring to Fig. 8B, when the image display request has been issued (YES in step S100), device 100 determines whether or not it has received data from camera 200 (step S120). When device 100 has received the data from camera 200 (YES in step S120), it determines which of first image data 262 and second image data 264 is included in the received data (step S122) and stores the image data included in the received data in a corresponding area in buffer 140 (step S124).

In step S122, to which region setting the image data corresponds is determined with at least one method described above.

Device 100 then generates synthesized image 170 based on first image data 262 and second image data 264 stored in buffer 140 (step S126). Device 100 then outputs generated synthesized image 170 to display 108 (step S128). When only one of first image data 262 and second image data 164 is stored in buffer 140, processing in steps S126 and S128 may be skipped.

Device 100 repeats processing in steps S120 to S128 until it is instructed to stop image display.

When device 100 is instructed to stop image display (YES in step S130), it quits the process.

Processing shown in Figs. 8A and 8B may be performed in parallel or in series. An order of performing the processing shown in Figs. 8A and 8B may freely be modified. A plurality of steps shown in Fig. 8A or 8B may be performed in parallel. The plurality of steps shown in Fig. 8A or 8B may be performed as a single step.

Device 100 arranges first image 172 based on first image data 262 and second image 174 based on second image data 264 at predetermined positions in synthesized image 170 (see Figs. 3 and 4). Device 100 arranges first image 172 based on first image data 262 at a predetermined position (a first position: for example, on a right side) in synthesized image 170 based on the first data (for example, the data including first image data 262) received from camera 200 including the identification information indicating first region setting 182. Similarly, device 100 arranges second image 174 based on second image data 264 at another predetermined position (a second position: for example, on a left side) in synthesized image 170 based on the second data (for example, the data including second image data 264) received from camera 200 including the identification information indicating second region setting 184.

Alternatively, when second region setting 184 does not include the identification information, device 100 may arrange second image 174 based on second image data 264 at another predetermined position (the second position: for example, on the left side) in synthesized image 170 based on the second data (for example, the data including second image data 264) received from camera 200 not including the identification information indicating second region setting 184.

### [G. Modification]

Though the embodiment described above shows an example where two regions, the image data of which is to be generated, are prepared, three or more regions may be set as being alternately switched. In this case, synthesized image 170 includes three or more images. In this case again, requests for transmission by the camera, of the image data corresponding to two regions of the three or more regions may be concluded as being alternately switched.

The region, the image data of which is to be generated, may be determined with any method. For example, the region may be set in advance or by the user, or the ROI may be set around the face of a person based on a result of face recognition. In an example of determination by face recognition, even when the region where the person is present in imaging region 250 changes over time as a result of successive face recognition, the ROI can follow the face of the person and its vicinity. Such processing for face recognition may be performed in at least one of device 100 and camera 200. By way of example, device 100 may specify a position of the face of the person by image processing of the received image data and generate region setting corresponding to the specified position. In an example where processing for face recognition is performed in camera 200, on the other hand, device 100 may transmit a request necessary for face recognition (for example, a request for recognition of the face of a specific person present in imaging region 250) to camera 200. When information on a range of the ROI set in device 100 is necessary, camera 200 may transmit to device 100, in addition to the generated image data, the range (for example, coordinates of vertices) of the ROI corresponding to the image data.

Though Figs. 3 and 4 above show an example where device 100 shows images based on the image data corresponding to the plurality of regions transmitted from camera 200, a plurality of images based on a plurality of pieces of image data do not have to always be shown. When device 100 does not show a plurality of images based on respective pieces of image data corresponding to a plurality of regions (that is, shows only an image based on image data corresponding to a specific region), a frequency of imaging of the image data used for display may be set to be higher than a frequency of imaging of the image data in imaging of the plurality of pieces of image data corresponding to the plurality of regions. For example, device 100 may show only the image showing the entire imaging region 250 (for example, show only second image 174 shown in Fig. 4) at certain time. At this time, the ROI does not have to be set. Thereafter, in zooming in on a specific region, synthesized image 170 including first image 172 and second image 174 shown in Fig. 4 is shown, and when a region to be zoomed in is further determined, only first image 172 shown in Fig. 4 may be shown.

The data transmitted from camera 200 may include generated image data as it is (that is, without being compressed) or may include compressed image data. In transmission of the image data without compression, compression processing in camera 200 and decompression processing in device 100 are not necessary, and hence increase in processing load can be suppressed. When the image data is transmitted as being compressed, more other data can be transmitted.

Camera 200 may be a general-purpose camera. The general-purpose camera, however, is unable to transmit data including identification information in some cases. In that case, the general-purpose camera may transmit data including an ROI to device 100. Device 100 may determine the ROI corresponding to the received image data in accordance with a value of the ROI included in the received data and generate synthesized image 170 in accordance with the determined ROI.

The ROI may be set with the method in accordance with the UVC standard as described above or a method in accordance with any communication standards.

Device 100 may generate an avatar based on at least one of first image data 262 and second image data 264, by way of example of processing for at least one of first image 172 and second image 174. For example, an avatar that moves with movement of an object (user) of first image data 262 or second image data 264 may be generated, or an avatar a facial expression of which changes with a facial expression of the object (user) may be generated. Device 100 can efficiently transmit data by setting a region necessary for control for generation of the avatar.

Though device 100 outputs generated synthesized image 170 to display 108, it may output the synthesized image to another destination. For example, device 100 may transmit synthesized image 170 to another device by outputting synthesized image 170 to a transmission unit, and synthesized image 170 or an image resulting from processing of synthesized image 170 may be shown in another device 100. Device 100 may transmit at least one of first image data 262 and second image data 264 or image data based on these pieces of image data to another device 100. Another device 100 may generate and show an image with the use of these pieces of image data or another piece of image data.

While certain example systems, methods, devices, and apparatuses have been described herein, it is to be understood that the appended claims are not to be limited to the systems, methods, devices, and apparatuses disclosed, but on the contrary, are intended to cover various modifications and equivalent arrangements included within the spirit and scope of the appended claims.

## Claims

1. A system (1) comprising:
a device (100); and
a camera (200) connected to the device through a wired or wireless connection, wherein
the device is configured to
alternately transmit to the camera, a first request that causes the camera to transmit image data (262) corresponding to a first region (252) in an imaging region of the camera and a second request that causes the camera to transmit image data (264) corresponding to a second region (254) in the imaging region, and
the camera is configured to
generate first image data corresponding to the first region from entire image data corresponding to the imaging region and transmit first data comprising the first image data to the device, in accordance with the first request, and
generate second image data corresponding to the second region from the entire image data and transmit second data comprising the second image data to the device, in accordance with the second request, and
the device is configured to output a synthesized image (170) comprising a first image (172) based on the first image data in the received first data and a second image (174) based on the second image data in the received second data.

2. The system according to claim 1, wherein
the first request comprises first identification information and the first data comprises second identification information corresponding to the first identification information, and
the device is configured to
arrange the first image at a first position in the synthesized image based on the received first data comprising the second identification information, and
arrange the second image at a second position in the synthesized image based on the received second data not comprising the second identification information.

3. The system according to claim 1, wherein
the first request comprises first identification information and the first data comprises second identification information corresponding to the first identification information,
the second request comprises third identification information different from the first identification information and the second data comprises fourth identification information corresponding to the third identification information and different from the second identification information, and
the device is configured to arrange the second image at a second position in the synthesized image based on the received second data comprising the fourth identification information.

4. The system according to claim 3, wherein
the first identification information and the third identification information are set irrelevant to which region in the imaging region the camera is caused to transmit image data corresponding to.

5. The system according to claim 3 or 4, wherein
each of the first identification information and the third identification information is one of two values.

6. The system according to any of claims 2 to 5, wherein
the first identification information is stored in a header defined under USB video class (UVC) standard.

7. The system according to any of claims 2 to 6, wherein
the first identification information is stored in the first image data.

8. The system according to claim 7, wherein
the first identification information is stored in data in the first image data, the data corresponding to an image at an edge in the first region.

9. The system according to any of claims 1 to 8, wherein
the first request comprises a request (182) for setting image data corresponding to the first region in the imaging region as image data in data the camera is caused to transmit,
the second request comprises a request (184) for setting image data corresponding to the second region in the imaging region as image data in data the camera is caused to transmit, and
the camera is configured to transmit data comprising the set image data in accordance with a third request that causes the camera to transmit data including image data.

10. The system according to any of claims 1 to 9, wherein
the device is configured to transmit a fourth request (180) for setting an image size of the image data the camera is caused to transmit, before transmission of the first request and the second request, and
the first request and the second request comprise no request for changing the image size.

11. The system according to claim 10, wherein
the set image size is smaller than an image size according to specifications.

12. A camera to be used in the system according to any of claims 1 to 11, configured to
generate the first image data corresponding to the first region from the entire image data corresponding to the imaging region in accordance with the first request,
generate the second image data corresponding to the second region from the entire image data in accordance with the second request,
transmit the first data comprising the first image data to the device, and
transmit the second data comprising the second image data to the device,
wherein
the first request comprises the first identification information and the first data comprises the second identification information corresponding to the first identification information.

13. A device to be used in the system according to any of claims 1 to 11, configured to
alternately transmit to a camera, a first request that causes the camera to transmit image data corresponding to a first region in an imaging region of the camera and a second request that causes the camera to transmit image data corresponding to a second region in the imaging region, and
output a synthesized image comprising a first image based on the first image data in the first data received from the camera and a second image based on the second image data in the second data received from the camera.

14. A method to be performed in a system (1) comprising a device (100) and a camera (200) connected to the device through a wired or wireless connection, comprising:
alternately transmitting, by the device, to the camera, a first request that causes the camera to transmit image data (262) corresponding to a first region (252) in an imaging region of the camera and a second request that causes the camera to transmit image data (264) corresponding to a second region (254) in the imaging region (SQ4, SQ10; S104, S106);
generating, by the camera, first image data corresponding to the first region from entire image data corresponding to the imaging region and transmitting, by the camera, first data comprising the first image data to the device, in accordance with the first request (SQ8);
generating, by the camera, second image data corresponding to the second region from the entire image data and transmitting, by the camera, second data comprising the second image data to the device, in accordance with the second request (SQ14); and
outputting, by the device, a synthesized image (170) comprising a first image (172) based on the first image data in the received first data and a second image (174) based on the second image data in the received second data (S126).
